# EUROPÄISCHE PATENTSCHRIFT

(11) **EP 3 003 793 B1**
(45) Veröffentlichungstag und Bekanntmachung des Hinweises auf die Patenterteilung: **11.12.2019**
(21) Anmeldenummer: 14726142.4
(22) Anmeldetag: 23.05.2014
(51) Int. Cl.: B60R 21/206, B60R 21/217

(54) **KNIEAUFPRALLSCHUTZEINRICHTUNG FÜR EIN KRAFTFAHRZEUG**
KNEE IMPACT PROTECTION UNIT FOR A MOTOR VEHICLE
DISPOSITIF DE PROTECTION DES GENOUX CONTRE LES CHOCS DANS UN VÉHICULE AUTOMOBILE

(30) Priorität: 28.05.2013 DE 102013009065
(43) Veröffentlichungstag der Anmeldung: 13.04.2016
(73) Patentinhaber: Autoliv Development AB, 447 83 Vårgårda (SE)
(72) Erfinder: GOTTSCHALK, Konrad, 85354 Freising (DE); BROUSSARD, Marco, 85221 Dachau (DE); SCHULER, Harald, 85229 Niederroth (DE)
(74) Vertreter: Schön, Thilo
(86) Internationale Anmeldenummer: PCT/EP2014/060599
(87) Internationale Veröffentlichungsnummer: WO 2014/191302

(56) Entgegenhaltungen:
- DE-A1-102006 050 842
- DE-A1-102009 019 077
- DE-U1-202010 001 918
- US-A1- 2008 174 091
- US-A1- 2010 244 410
- US-A1- 2012 049 497
- US-A1- 2012 244 301
- US-B1- 6 213 497
- "AIR BAG MODULE COVER WITH INTEGRAL HOUSING", RESEARCH DISCLOSURE, MASON PUBLICATIONS, HAMPSHIRE, GB, Nr. 389, 1. September 1996 (1996-09-01), Seite 567/568, XP000635489, ISSN: 0374-4353

## Beschreibung

Bei der Erfindung wird ausgegangen von einer Knieaufprallschutzeinrichtung für ein Kraftfahrzeug, gemäß Oberbegriff des Patentanspruchs 1.

Aus der DE 44 18 628 A1 ist eine Knieaufprallschutzeinrichtung bekannt. Die Knieaufprallschutzeinrichtung umfasst ein unterhalb einer Lenksäule angeordnetes Aufnahmegehäuse für ein aufblasbares Schutzkissen. Das Aufnahmegehäuse wird durch mehrere Gehäusewandungen gebildet, wobei eine untere Gehäusewandung nicht vorgesehen ist. Das somit nach unten offene Aufnahmegehäuse wird durch eine separat ausgebildete und am Aufnahmegehäuse beweglich gelagerte Abdeckung verschlossen, wenn das Schutzkissen in einem inaktiven Zustand ist. Das Befüllen des Schutzkissens führt zum Aufdrücken der Abdeckung, wodurch eine Austrittsöffnung für das sich entfaltende Schutzkissen freigegeben wird.

In der gattungsbildenden US 201210049497 A1 ist eine Knieschutzeinrichtung beschrieben, welche ein Gehäuse mit drei Gehäuseseitenwandungen und einem Gehäuseboden aufweist. Die die Austrittsöffnung verschließende Abdeckung ist einstückig mit dem Gehäuseboden ausgebildet. Diese Abdeckung weist im montierten Zustand im Wesentlichen in Richtung der Schienbeine des zu schützenden Insassen. Die drei Seitenwände sind balgenartig ausgebildet, sodass das Gehäuse deformiert wird, wenn der sich im Schutzkissen befindende Gasgenerator gezündet wird und sich das Schutzkissen ausdehnt.

Aufgabe der Erfindung ist es, eine optimierte Knieaufprallschutzeinrichtung der anzugeben, insbesondere dahingehend, dass sich das Schutzkissen in eine gewünschte Schutzposition entfaltet.

Gelöst wird diese Aufgabe mit einer Knieaufprallschutzeinrichtung, die die Merkmale des Patentanspruchs 1 aufweist. Weiterbildungen, Ausführungsbeispiele und/oder vorteilhafte Ausgestaltungen der Erfindung sind Gegenstand der abhängigen Ansprüche.

Auch bei der erfindungsgemäßen Knieaufprallschutzeinrichtung gemäß Patentanspruch 1 ist die Abdeckung Bestandteil des Aufnahmegehäuses und ist mit zumindest einer der Gehäusewandungen des Aufnahmegehäuses einstückig oder stoffschlüssig ausgebildet. Dadurch lässt sich das Aufnahmegehäuse kostengünstig herstellen und benötigt außerdem wenige Arbeitsschritte, um zusammengesetzt zu werden. Insbesondere muss die Abdeckung nicht in einem separaten Arbeitsschritt an dem Aufnahmegehäuse befestigt werden. Darüber hinaus kann das erfindungsgemäße Aufnahmegehäuse mit einem gegenüber dem Stand der Technik geringeren Gewicht hergestellt werden. Über dies kann die erfindungsgemäße Knieaufprallschutzeinrichtung als vollständig vormontierte Baueinheit für den Einbau in das Kraftfahrzeug bereitgestellt werden. Eine nach dem Einbau der erfindungsgemäßen Knieaufprallschutzeinrichtung in das Kraftfahrzeug auszuführende Montage der Abdeckung ist somit nicht notwendig.

Mehrere Gehäusewandungen bilden eine umlaufende Gehäuseseitenwand und die Abdeckung ist mit zumindest einer dieser Gehäusewandungen einstückig ausgebildet oder mehrere Gehäusewandungen bilden eine umlaufende Gehäuseseitenwand und einen Abschnitt eines Gehäusebodens des Aufnahmegehäuses und die Abdeckung ist mit der den Abschnitt des Gehäusebodens bildenden Gehäusewandung einstückig ausgebildet. Je nach Anforderung kann so eine größere oder kleinere Austrittsöffnung für das Schutzkissen an dem Aufnahmegehäuse vorgehalten werden.

Erfindungsgemäß ist das Aufnahmegehäuse mit einer Einrichtung zur Begrenzung der Öffnungsweite der Abdeckung ausgestattet. Dadurch wird durch die geöffnete Abdeckung ein Leitkanal für das sich entfaltende Schutzkissen bereitgestellt, so dass sich das Schutzkissen in eine gewünschte Schutzposition entfalten kann. Außerdem wird ein unkontrolliertes Bewegen der Abdeckung verhindert.

Die Einrichtung zur Öffnungsweitenbegrenzung weist ein an der Abdeckung angebrachtes Führungselement und in einer der Gehäusewandungen eine Führungsbahn mit einem Bahnende, in die das Führungselement eingreift, auf. Beim Öffnen der Abdeckung trifft das Führungselement in der Führungsbahn auf das Bahnende und die Bewegung der Abdeckung wird dadurch gestoppt.

Als ein besonders bevorzugtes Anwendungsbeispiel wird die erfindungsgemäße Knieaufprallschutzeinrichtung in dem Kraftfahrzeug in einem nicht sichtbaren Bereich, beispielsweise unterhalb einer Schalttafel, angeordnet, wodurch sich eine höheren optischen Ansprüchen genügende Ausgestaltung der Abdeckung erübrig, so dass eine weitere Kosten- und gegebenenfalls auch Gewichtsreduzierung erzielt wird.

Nach einer besonders bevorzugten Weiterbildung der Erfindung ist vorgesehen, dass die Abdeckung über eine Scharniereinrichtung mit der zumindest einen Gehäusewandung verbunden ist, wobei die Scharniereinrichtung einen plastisch und/oder elastisch verformbaren Funktionsabschnitt für die Relativbewegung der Abdeckung gegenüber der Gehäusewandung aufweist. Der Funktionsabschnitt kann beispielsweise durch eine Materialschwächung, insbesondere eine Reduzierung der Materialdicke oder in Form von mehreren Durchbrüchen, erzielt werden. So kann beispielsweise bei einem aus Kunststoff hergestellten Aufnahmegehäuse der Funktionsabschnitt durch ein so genanntes Filmscharnier gebildet sein. Denkbar wäre es in einer alternativen Ausführungsform, die Gehäusewandung und die Abdeckung aus zwei unterschiedlichen Kunststoffen herzustellen, wobei ein steifer bzw. harter Kunststoff für die Gehäusewandung sowie die Abdeckung und ein flexibler bzw. weicherer Kunststoff für den Funktionsabschnitt der Scharniereinrichtung verwendet wird. Gehäusewandung, Abdeckung und Scharniereinrichtung könnten somit als so genanntes 2-Komponenten-Bauteil, gegebenenfalls auch in einem einzigen Herstellprozess, realisiert werden. Selbstverständlich ist es möglich, das gesamte Aufnahmegehäuse als einstückiges Bauteil herzustellen. Das Aufnahmegehäuse aus Kunststoff könnte somit im Spritzgussverfahren oder durch das so genannte Blasformen hergestellt werden.

Nach einer alternativen Ausführungsform kann die zumindest eine Gehäusewandung und die Abdeckung auch aus Metall einstückig hergestellt sein. Der Funktionsabschnitt der Scharniereinrichtung kann bei einem Metallgehäuse ebenfalls durch eine Materialschwächung - wie oben beschrieben - realisiert werden. Selbstverständlich kann auch das gesamte Aufnahmegehäuse in Metall einstückig hergestellt werden. Als Herstellverfahren für ein Metallgehäuse kommen insbesondere das Tiefziehen und/oder Biegen einer Metallplatine zur Anwendung. Die typische Dicke einer solchen Metallplatine liegt beispielweise zwischen 0,4 und 1mm, vorzugsweise zwischen 0,6 und 0,8mm.

Nach einer Weiterbildung der Erfindung ist vorgesehen, dass das Aufnahmegehäuse einen Gehäusedeckel aufweist, der der Abdeckung gegenüberliegend angeordnet ist. Somit kann das Schutzkissen sich beim Befüllen an dem Gehäusedeckel abstützen und sich in Richtung Austrittsöffnung entfalten.

Nach einer bevorzugten Weiterbildung der Erfindung ist gemäß Anspruch 2 vorgesehen, das Aufnahmegehäuse mit einer Halteeinrichtung auszustatten, die die Abdeckung in einer die Austrittsöffnung verschließenden Schließstellung hält. Damit wird ein ungewolltes Öffnen des Aufnahmegehäuses vermieden, so dass das Schutzkissen im inaktiven Zustand dauerhaft geschützt im Aufnahmegehäuse verstaut ist.

Vorzugsweise umfasst die Halteeinrichtung zwei ineinander greifende und voneinander lösbare Riegelorgane, von denen eines an der Abdeckung und das andere an einer entsprechend geeigneten Gehäusewandung des Aufnahmegehäuses angeordnet ist. Durch das Befüllen des Schutzkissens werden die Riegelorgane voneinander gelöst bzw. entriegelt, wenn sich das Schutzkissen ausdehnt.

Häufig kann es bevorzugt sein, die Abdeckung ganz oder teilweise aus einem Thermoplastischen Elastomer zu fertigen. Weiter kann es zu bevorzugen sein, ein oder mehrere Einlageteile, insbesondere aus einem sogenannten Organosheet, vorzusehen, welche von einem Kunststoff umspritzt sind.

Die in dieser Anmeldung beschriebenen und/oder gezeigten Merkmale können für sich alleine und in beliebiger Kombination mit einem anderen der beschriebenen und/oder gezeigten Merkmale kombiniert werden. Dies gilt auch für ein Merkmal, welches nur zusammen mit einem anderen beschriebenen und/oder gezeigten Merkmal kombiniert wiedergegeben ist.

Die Erfindung wird nachfolgend anhand von Ausführungsbeispielen mit Bezug auf die Zeichnung näher erläutert. Es zeigen:
- Fig. 1: eine Knieaufprallschutzeinrichtung in einem teilweise dargestellten Kraftfahrzeug,
- Fig. 2: die Knieaufprallschutzeinrichtung für die Anordnung auf einer Beifahrerseite eines Kraftfahrzeugs,
- Fig. 3: die Knieaufprallschutzeinrichtung für die Anordnung auf einer Fahrerseite eines Kraftfahrzeugs,
- Fig. 4: ein Aufnahmegehäuse der Knieaufprallschutzeinrichtung,
- Fig. 5: ein Aufnahmegehäuse der Knieaufprallschutzeinrichtung nach einem anderen Ausführungsbeispiel,
- Fig. 6: eine Schnittdarstellung des Aufnahmegehäuses entlang der Linie AA in Figur 4,
- Fig. 7 bis 9: unterschiedliche Ausführungsbeispiele einer Halteeinrichtung für die Abdeckung gemäß Einzelheit X in Fig. 6,
- Fig. 10: eine erfindungsgemäße Einrichtung zur Begrenzung der Öffnungsweite der Abdeckung ,
- Fig. 11: eine Schnittdarstellung entlang der Linie B-B in Fig. 10,
- Fig. 12: ein Aufnahmegehäuse einer nicht erfindungsgemäßen Knieaufprallschutzeinrichtung,
- Fig. 13: ein weiteres Ausführungsbeispiel einer Halteeinrichtung für die Abdeckung gemäß Fig. 12,
- Fig. 14: in geschnittener Teilansicht die geöffnete Abdeckung nach Fig. 12,
- Fig. 15: ein Ausführungsbeispiel, welches dem der Figur 6 ähnlich ist,
- Fig. 16: eine Variation zu dem in Figur 15 Gezeigten,
- Fig. 17: eine Variation zu dem in Figur 16 Gezeigten,
- Fig. 18: eine Variation zu dem in Figur 17 Gezeigten,
- Fig. 19: eine Variation zu dem in Figur 18 Gezeigten,
- Fig. 20: eine Variation zu dem in Figur 18 Gezeigten und
- Fig. 21: eine weitere Variation zu dem in Figur 15 Gezeigten.

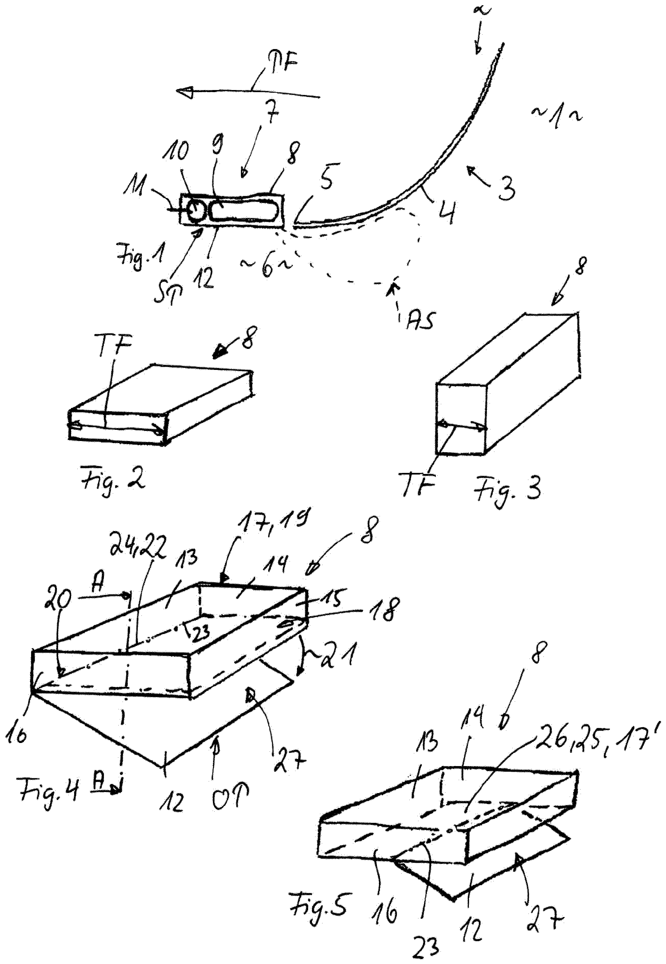

Fig. 1 zeigt stark vereinfacht in einer geschnittenen Seitenansicht teilweise einen Fahrzeuginnenraum 1 eines Kraftfahrzeugs 2, wobei von einer Schalttafel 3 lediglich ein unterer, gekrümmt verlaufenden Abschnitt einer dem Fahrzeuginnenraum 1 zugewandten Verkleidung 4 gezeigt ist, die sich mit ihrem unteren freien Ende 5 bis in einem Fußraum 6 des Fahrzeuginnenraums 1 erstrecken kann. Ein Pfeil PF weist in Richtung Fahrzeugbug, der hier nicht gezeigt ist.

Benachbart zu bzw. in Verlängerung der Verkleidung 4 schließt sich an das freie Ende 5 eine Knieaufprallschutzeinrichtung 7 an, die an einer nicht gezeigten Tragstruktur der Schalttafel 3 befestigt sein kann. Die Knieaufprallschutzeinrichtung 7 umfasst ein kastenförmiges Aufnahmegehäuse 8 für ein innerhalb des Gehäuses 8 liegendes aufblasbares Schutzkissen 9 und eine vorzugsweise innerhalb des Aufnahmegehäuses 8 anordenbare Aufblaseinrichtung 10 für das aufblasbare Schutzkissen 9, wobei die Aufblaseinrichtung 10 insbesondere als so genannter Gasgenerator ausgebildet sein kann. Über eine angedeutete Steuerleitung 11 kann die Aufblaseinrichtung 10 aktiviert werden, so dass das zusammengefaltete bzw. entleerte Schutzkissen 9 entfaltet bzw. befüllt wird und ausgehend von seinem inaktiven Zustand in eine in Fig. 1 gestrichelt eingezeichnete Schutz- bzw. Aufblasstellung AS gebracht wird, in der es die Verkleidung 4 der Schalttafel 3 bedeckt.

Aus Fig. 1 wird deutlich, dass die Knieaufprallschutzeinrichtung 7 in einem von den Fahrzeuginsassen nicht einsehbaren Bereich liegt, wenn die hier nicht dargestellten Fahrzeuginsassen ihre normale Sitzposition im Fahrzeuginnenraum 1 einnehmen. Eine Abdeckung 12 des Aufnahmegehäuses 8 kann somit nicht von den bzw. dem Fahrzeuginsassen gesehen werden, so dass sich eine ansprechende Oberfläche in Anpassung an die Oberfläche der Verkleidung 4 erübrigt. Die Abdeckung 12 kann mit der Verkleidung 4 fluchtend an das Ende 5 anschließen.

In Fig. 2 ist ein Aufnahmegehäuse 8 gezeigt, welches in bevorzugter Anordnung einem hier nicht dargestellten Beifahrerbereich des Fahrzeuginnenraums 1 zugeordnet ist. Bezogen auf die Pfeilrichtung PF weist das Aufnahmegehäuse 8 eine relativ große Tiefe TF auf und ist in senkrechter Richtung dazu relativ flach ausgebildet. Im Gegensatz dazu zeigt Fig. 3 ein Aufnahmegehäuse 8, welches in bevorzugter Anordnung einem Fahrerbereich, insbesondere unterhalb eines hier nicht dargestellten Lenkrades, zugeordnet ist. Das Aufnahmegehäuse 8 gemäß Fig. 3 weist bezogen auf die Pfeilrichtung PF eine relativ geringe Tiefe TF auf und ist in senkrechter Richtung dazu relativ hoch ausgebildet.

Gemäß Fig. 4 besitzt das Aufnahmegehäuse 8 mehrere Gehäusewandungen 13-17, von denen die Gehäusewandungen 13-16 eine umlaufende Gehäuseseitenwand 18 bilden. Die Gehäusewandung 17 bildet einen Gehäusedeckel 19. In Fig. 4 ist die Abdeckung 12 in geöffneter Position OP gezeigt. Ausgehend von der in Fig. 1 gezeigten Schließposition SP der Abdeckung 12 kann die Abdeckung 12 durch eine Scharniereinrichtung 20 in die Offenposition OP bewegt, vorzugsweise geschwenkt, werden, wie dies durch einen Pfeil 21 gekennzeichnet ist. Die Scharniereinrichtung 20 verbindet die Gehäusewandung 13 mit der Abdeckung 12 beispielsweise im Bereich der unteren Gehäuseecke 22 über einen Funktionsabschnitt 23, wodurch Gehäusewandung 13 und Abdeckung 12 einstückig ausgebildet sind. Der Funktionsabschnitt 23 wird gebildet durch eine Materialschwächung in Form einer Reduzierung der Materialdicke und/oder durch Durchbrüche in dem Material für die Gehäusewandung 13 und die Abdeckung 12, was in Fig. 4 durch eine strichpunktierte Linie 24 dargestellt ist. Somit wird klar, dass durch die einstückige Ausführung der Abdeckung 12 und der Gehäusewandung 13 die Abdeckung 12 einstückiger Bestandteil des Aufnahmegehäuses 8 ist. Auch die Scharniereinrichtung 20 ist somit einstückig mit der Abdeckung 12 und der Gehäusewandung 13 ausgeführt. Entfaltet sich das Schutzkissen 9 (Fig. 1) wird die Abdeckung 12 durch das sich ausdehnende Schutzkissen 9 in Richtung Offenposition OP gedrängt. Dabei wird der Funktionsabschnitt 23 elastisch und/oder plastisch verformt, wodurch die Scharnierfunktion bereitgestellt wird.

Im Unterschied zu Fig. 4 besitzt das Aufnahmegehäuse 8 nach Fig. 5 einen Abschnitt 25 für einen Gehäusebodens 26, der eine Gehäusewandung 17' bildet und der fest und unbeweglich mit den Gehäusewandungen 13, 14 und 16 verbunden ist. Der Gehäuseboden 26 erstreckt sich über einen Teil der in Richtung der Pfeilrichtung PF gemessenen Tiefe TF des Aufnahmegehäuses 8. Diese Erstreckung des Gehäusebodens 26 ist so bemessen, dass eine in Abhängigkeit des Schutzkissens 8 ausreichende Austrittsöffnung 27 bereitgestellt wird, so dass sich das Schutzkissen 9 in die in Fig. 1 gestrichelt eingezeichnete Schutzposition bzw. Aufblasstellung AS ausdehnen kann. Entsprechend wird nach dem Ausführungsbeispiel gemäß Fig. 4 eine größere Austrittsöffnung 27 für das Schutzkissen 9 bereitgestellt.

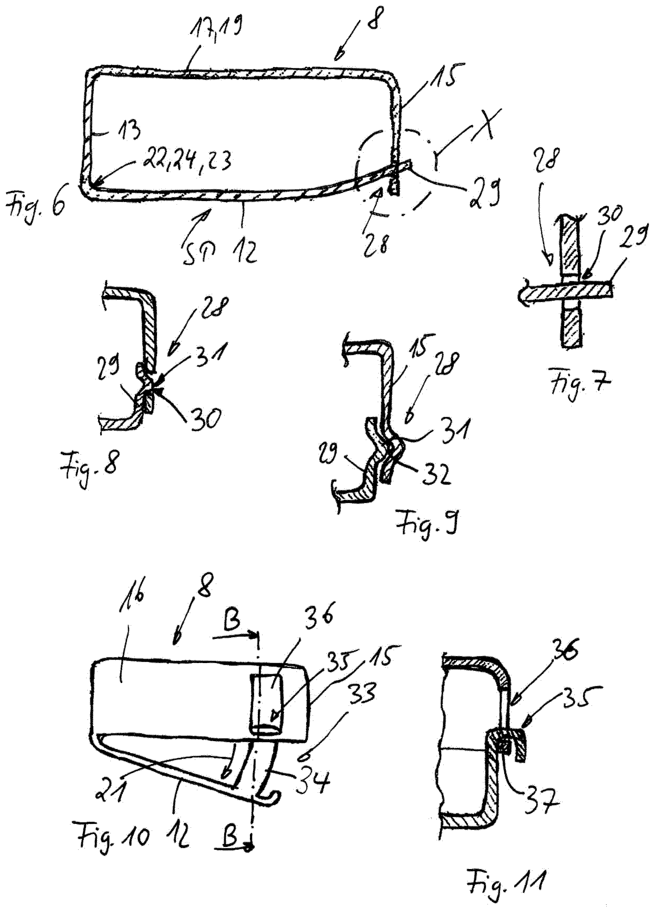

Damit die Abdeckung 12 in ihrer Schließposition SP sicher gehalten ist, ist gemäß Fig. 6 zumindest eine Halteeinrichtung 28 am Aufnahmegehäuse 8 vorgesehen. Die Halteeinrichtung 28 weist ein von der Abdeckung 12 ausgehendes erstes Riegelorgan 29 auf, das in ein zweites, an der Gehäusewandung 15 ausgebildetes Riegelorgan 30 eingreift, wie dies deutlich in Fig. 7 zu sehen ist. Das erste Riegelorgan 29 ist vorzugsweise als von der Abdeckung 12 ausgehende Lasche ausgebildet, während das zweite Riegelorgan 30 als Durchbruch in der Gehäusewandung 15 ausgebildet ist. Das erste Riegelorgan 29 durchsetzt den Durchbruch vollständig, wenn die Abdeckung 12 ihre Schließposition SP einnimmt. Es wäre alternativ denkbar, dass die Lasche in den Durchbruch lediglich teilweise eingreift. Beim Aufblasen des Schutzkissens 9 wird die Lasche so gebogen, dass durch eine weitere Abwärtsbewegung (Pfeil 21) der Abdeckung 12 die Lasche aus dem Durchbruch rutscht und so die Abwärtsbewegung freigegeben ist und die Abdeckung die Offenposition OP einnehmen kann.

Gemäß Fig. 8 ist das erste Riegelorgan 29 der Halteeinrichtung 28 als nach oben gebogene Lasche ausgebildet, von der eine Rastnase 31 ausgeht, die in den Durchbruch des zweiten Riegelorgans 30 eingreift. Gemäß Fig. 9 ist an Stelle des Durchbruchs für das zweite Riegelorgan 30 eine Vertiefung 32 vorgesehen, in die die Rastnase 31 eingreift. Rastnase 31 und Vertiefung 32 können durch entsprechende Materialumformung in der Lasche 29 bzw. in der Gehäusewandung 15 ausgebildet sein. Entriegelt wird die Halteeinrichtung 28 auch hier durch das sich aufblasende Schutzkissen 9.

Damit die Öffnungsweite, insbesondere der Öffnungswinkel, der Abdeckung 12 begrenzt werden kann, weist das Aufnahmegehäuse 8 eine Einrichtung 33 zur Öffnungsweitenbegrenzung auf, die in Fig. 10 und 11 dargestellt ist. Von der Abdeckung 12 geht seitlich ein nach oben gerichteter Fortsatz 34 aus, von dessen freien Ende nach außen in Richtung Gehäusewandung 16 ein Führungselement 35 abkragt, welches in eine in der Gehäusewandung 16 ausgebildete Führungsbahn 36 eingreift, die durch einen Durchbruch in der Gehäusewandung 16 gebildet ist. Bei einer Öffnungsbewegung der Abdeckung 12 in Pfeilrichtung 21 durch das sich entfaltende Schutzkissen 9 wird das Führungselement 35 am unteren Bahnende 37 angehalten und somit die Öffnungsbewegung der Abdeckung 12 gestoppt. Durch eine entsprechend ausgebildete Länge der Führungsbahn 36 kann die Öffnungsweite der Abdeckung 12 entsprechend den Anforderungen für das aufgeblasene Schutzkissen 9 begrenzt werden. Wie bei den Ausführungsbeispielen nach den Fig. 4 und 5 wird durch die geöffnete Abdeckung 12 ein Leitelement bzw. ein Leitkanal für das sich entfaltende Schutzkissen 9 gebildet, so dass es die in Fig. 1 gestrichelt dargestellte aufgeblasene Position AS einnehmen kann. Denkbar wäre es, an beiden Gehäusewandungen 14 und 16 eine solche Einrichtung 33 vorzusehen.

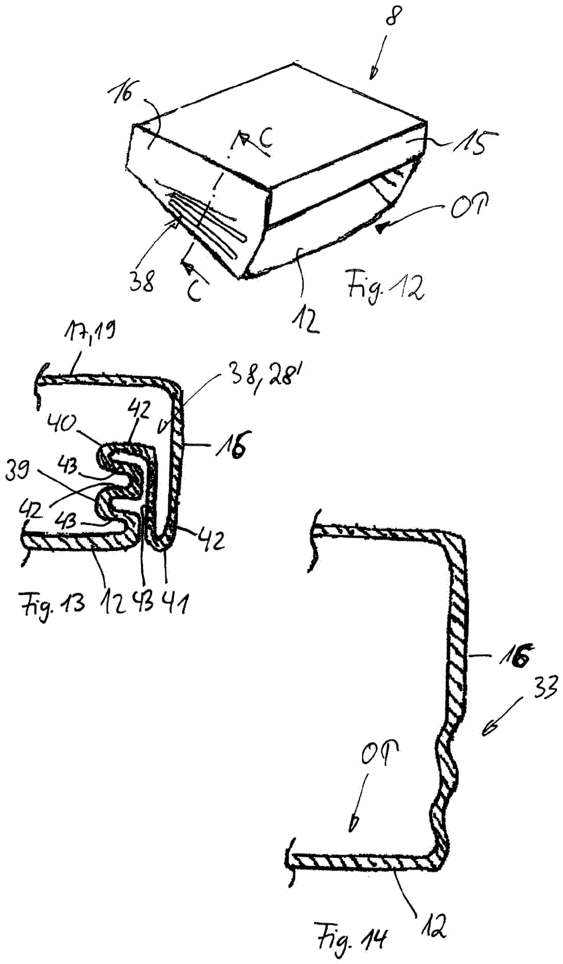

Das in Fig. 12 bis 14 gezeigte Aufnahmegehäuse 8 zeichnet sich durch eine Halteeinrichtung 28' aus, die durch eine Wandstruktur 38 gebildet ist, die die Gehäusewandung 16 und die Abdeckung 12 miteinander verbindet. In Fig. 12 nimmt die Abdeckung 12 ihre Offenposition OP ein. In der Schnittdarstellung nach Fig. 13 befindet sich die Abdeckung 12 in der Schließposition SP, wohingegen in Fig. 14 in Schnittdarstellung wieder die Offenposition OP der Abdeckung 12 zu sehen ist. Ein Vergleich der Fig. 13 und 14 zeigt, dass die Wandstruktur 38 zumindest zwei unterschiedliche Formen annehmen kann, wobei in Fig. 12 die ursprüngliche Grundform der Wandstruktur 38 dargestellt ist, in der sie zusammengefaltet ist, ähnlich einer Luftbalgstruktur eines Akkordeons, und in Fig. 12 und 14 entfaltet bzw. auseinander gefaltet ist. Zumindest die ursprüngliche Grundform der Wandstruktur 38 in Fig. 13 ist formstabil und kann nur durch Krafteinwirkung aufgelöst werden, insbesondere, wenn sich das Schutzkissen 9 entfaltet. Die dabei auftretenden Kräfte wirken auf die Abdeckung 12, die somit in Pfeilrichtung 21 nach unten gedrängt wird. Die durch das sich aufblasende Schutzkissen 9 wirkende Kraft ist dabei so groß, dass die zusammengefaltete Wandstruktur 38 durch elastische und/oder plastische Verformung in die Endform nach dem Fig. 12 und 14 überführt wird.

Die Wandstruktur 38 ist somit in der ursprünglichen Grundform nach Fig. 13 zusammengefaltet und/oder kontrahiert und wird durch die von dem Schutzkissen 9 aufgebrachte Kraft entfaltet und/oder gedehnt und dabei plastisch und/oder elastisch verformt. In der ursprünglichen Grundform nach Fig. 13 bildet die Wandstruktur 38 die Halteeinrichtung 28', da die ursprüngliche Grundform stabil ist und nur durch Krafteinwirkung verändert werden kann. Somit hält die Wandstruktur 38 in der ursprünglichen Grundform nach Fig. 13 die Abdeckung in ihrer Schließposition SP. Insbesondere aus dem Fig. 12 und 14 wird auch deutlich, dass die Wandstruktur 38 in ihrer entfalteten bzw. verformten Endform zusätzlich auch als Einrichtung 33 zur Begrenzung der Öffnungsweite der Abdeckung 12 dient, die die Öffnungsbewegung der Abdeckung 12 stoppt, wenn die Wandstruktur 38 die gestreckte bzw. nahezu gestreckte Endform nach Fig. 14 einnimmt. Es ist klar, dass die Wandstruktur 38 eine oder mehrere Falten 39, 40, 41 aufweisen kann, deren gefaltete Lagen 42, 43 bzw. 44, 45 in der ursprünglichen Grundform nach Fig. 13 parallel zur Abdeckung 12 und/oder parallel zur Gehäusewandung 16 ausgerichtet sein können. Auch eine schräge Anordnung der gefalteten Lagen 42-45 gegenüber der Abdeckung 12 bzw. Gehäusewandung 16 ist möglich. Nach einer nicht gezeigten Ausführungsform könnte auch an der gegenüberliegenden Gehäusewandung 14 eine solche Halteeinrichtung 28' vorgesehen sein.

Für die Herstellung des Aufnahmegehäuses 8 kann vorgesehen sein, dieses in der Ausgangsform mit den Gehäusewandungen 13-16 und ggf. 17' und mit geöffneter Abdeckung 12 ggf. mit oder ohne Gehäusedeckel 19 herzustellen, wie dies die Fig. 4, 5, 10, 12 und 14 zeigen. In dieser Ausgangsform kann das Aufnahmegehäuse 8 zumindest mit dem Schutzkissen 9 im zusammengefaltetem Zustand beladen, d.h. ausgestattet werden. Eine anschließendes, ggf. manuelles Schließen der Abdeckung 12, d.h. überführen der Abdeckung 12 von der Offenposition OP in die Schließposition SP, bereitet die Knieaufprallschutzeinrichtung 7 für Ihren Einbau in das Kraftfahrzeug 2 vor. Insbesondere dadurch ist es möglich, das Aufnahmegehäuse 8 mit sämtlichen Gehäusewandungen 13-17 und der Abdeckung 12 einstückig auszuführen. Beim Schließen der Abdeckung 12 kann vorgesehen sein, dass der Funktionsabschnitt 23 elastisch und/oder plastisch verformt wird. Dennoch bleibt der Funktionsabschnitt 23 im Auslösefall der Knieaufprallschutzeinrichtung 7 funktionsfähig erhalten, so dass das sich aufblasende Schutzkissen 9 die Abdeckung 12 durch eine weitere elastische und/oder plastische Verformung des Funktionsabschnitts 23 öffnen kann.

Sofern das Aufnahmegehäuse 8 aus Kunststoff hergestellt ist, kann die Wandstruktur 38 beispielsweise einen weicheren Kunststoff als die übrigen Gehäusewandungen 13-17' und die Abdeckung 12 umfassen, so dass das Aufnahmegehäuse 8 als 2-Komponenten-Bauteil realisierbar ist. Denkbar ist aber auch eine materialeinheitliche Ausführung des Aufnahmegehäuses 8 aus Kunststoff oder Metall.

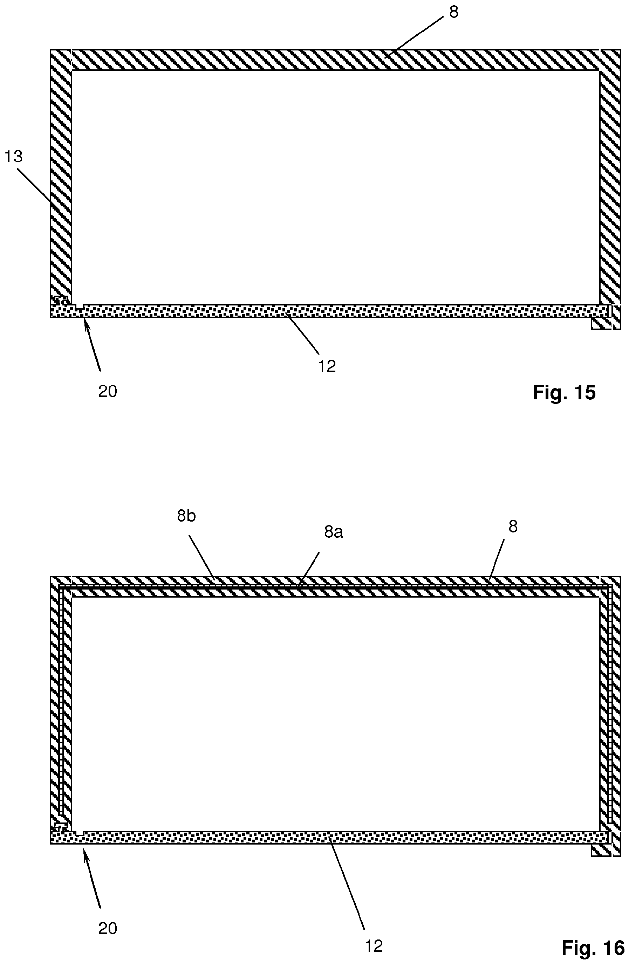

Wie dies bereits erwähnt wurde, kann die aus Aufnahmegehäuse 8 und Abdeckung 12 bestehende Baueinheit als 2-K-Bauteil ausgeführt sein. Ein Beispiel hierfür zeigt Figur 15, bei dem das Aufnahmegehäuse 8 aus einem relativ formstabilen Kunststoff, insbesondere aus Polypropylen (PP) oder aus Polyamid (PA), hergestellt ist, an dessen eine Gehäusewandung 13 die Abdeckung 12 angespritzt ist. Die Gehäuseabdeckung 8 besteht hierbei aus einem relativ weichen Material, nämlich aus einem Thermoplastischen Elastomer (TPE). Die Scharniereinrichtung 20 ist hierbei der Gehäuseabdeckung 12 zugeordnet.

Es ergibt sich eine sehr leichte Baugruppe, deren Aufnahmegehäuse 8 hinreichend formstabil ist und deren zum Fahrgastraum weisende Abdeckung 12 relativ weich ist, was zum einen im Hinblick auf den Insassen, welcher mit der Abdeckung 12 in Berührung kommen kann, vorteilhaft ist und was zum anderen günstig für das Öffnungsverhalten der Abdeckung 12 ist.

Um die Formstabilität des Aufnahmegehäuses 12 weiter zu erhöhen, kann dieses, wie in Figur 16 gezeigt ein Einlageteil 8a, welches insbesondere aus einem sogenannten Organosheet - einer faserverstärkten Kunststoffmatte - besteht, aufweisen, welches beim Herstellungsprozess in eine Spritzgussform eingelegt und von einem Kunststoff - im gezeigten Ausführungsbeispiel PP oder PA - umspritzt wird (Bezugszeichen 8b). Bei einem sogenannten Organosheet sind Fasern in eine Matrix aus einem thermoplastischen Material eingebettet, so dass ein erwärmtes Organosheet geformt werden kann. Soll ein Organosheet umspritzt werden, wie dies hier beschrieben ist, so ist es im Allgemeinen zu bevorzugen, dass das thermoplastische Material, welches die Matrix des Organosheets bildet, und das Material, mit welchem das Organosheet umspritzt wird, das gleiche Material ist. Im Ausführungsbeispiel der Figur 16 also PP oder PA.

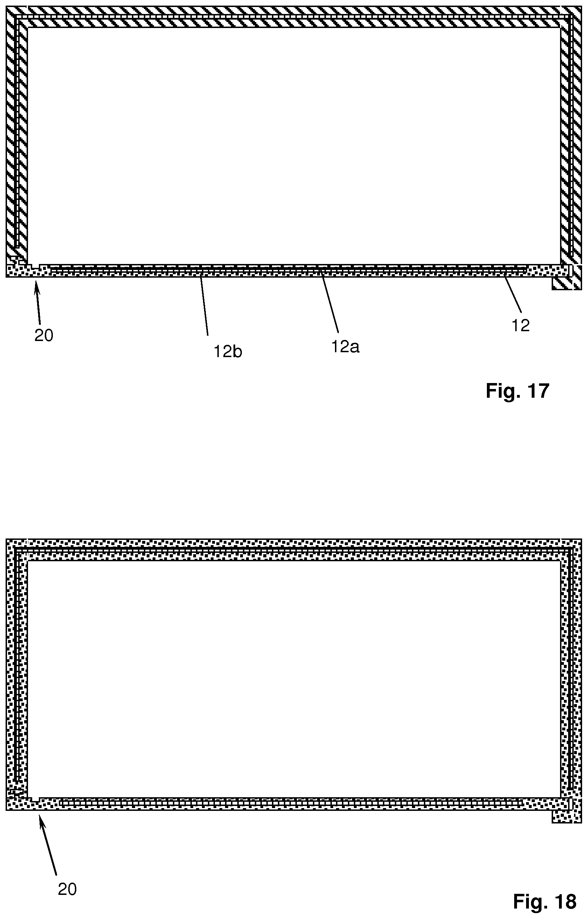

Wie in Figur 17 gezeigt, kann auch die Abdeckung 12 ein solches umspritztes Einlageteil 12a aufweisen, wobei auch dieses Einlageteil vorzugsweise ein Organosheet ist, dessen Matrixmaterial jedoch vorzugsweise TPE ist. Je nach den konkreten Gegebenheiten wird es häufig zu bevorzugen sein, dass sich das steife Einlageteil 12a nicht in den Bereich des Scharniers 20 und nicht in den Bereich erstreckt, mit welchem die Abdeckung 12 lösbar mit dem Aufnahmegehäuse 8 verbunden, insbesondere verrastet, ist, um weiterhin ein gutes Öffnungsverhalten zu erzielen (Figuren 17 und 18).

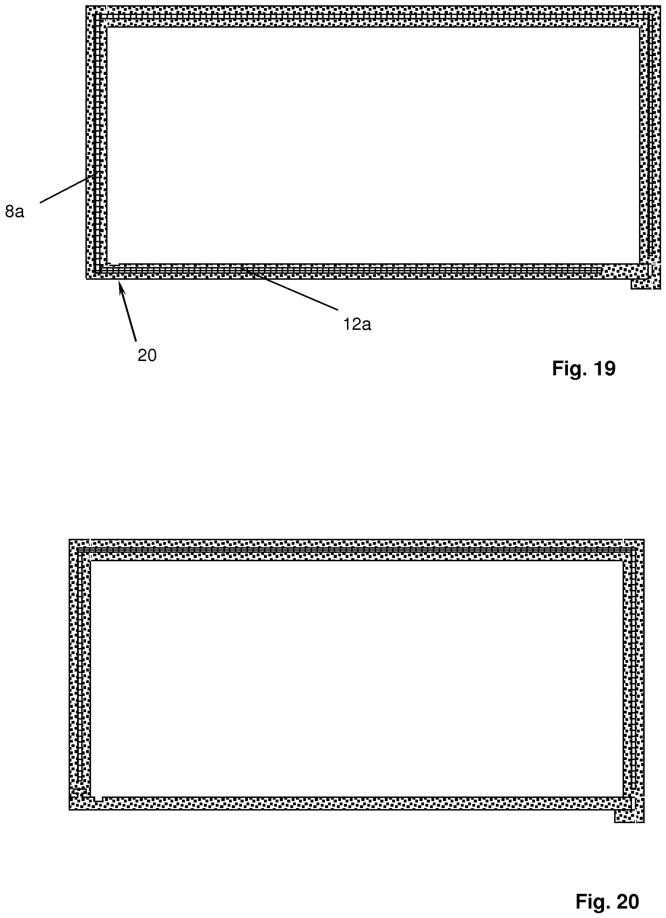

Wie in Figur 19 dargestellt, sind jedoch auch Anwendungsfälle denkbar, bei denen das Einlageteil 8a des Aufnahmegehäuses 8 und das Einlageteil 12a der Abdeckung 12 Abschnitte eines gemeinsamen Einlageteils sind.

Auch in den Fällen, in denen ein Einlageteil 12a in der Abdeckung 12 vorgesehen ist, besteht der Kunststoff, mit dem das Einlageteil 12a umspritzt ist (Bezugszeichen 12b), aus TPE. Somit wird eine weiche Oberfläche der Abdeckung 12 beibehalten, die Eigensteifigkeit der Abdeckung 12 jedoch erhöht.

Wie in Figuren 18, 19 und 20 gezeigt, kann auch der umspritzte Kunststoff 8b des Aufnahmegehäuses 8 TPE sein.

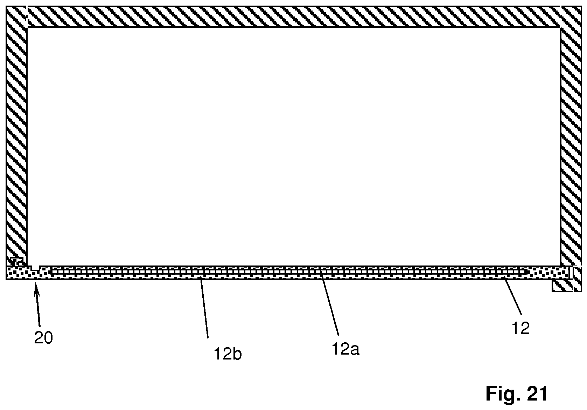

Grundsätzlich wäre es auch möglich, nur bei der Abdeckung 12 ein Einlageteil 12a vorzusehen, während das Aufnahmebauteil 8 kein solches Einlageteil aufweist, sondern ausschließlich aus - ggf. faserverstärktem - PP oder PA besteht (Figur 21).

In allen Ausführungsbeispielen der Figuren 15 bis 21 kann der Kunststoff des Aufnahmegehäuses 8 - also das PP, das PA oder das TPE faserverstärkt sein.

Sofern sowohl der umspritzte Kunststoff 8a des Aufnahmegehäuses 8 als auch die Abdeckung 12 beziehungsweise der umspritzte Kunststoff 12b der Abdeckung unverstärktes TPE ist, können Aufnahmegehäuse und Abdeckung auch einteilig im 1-K-Verfahren gespritzt sein.

### Bezugszeichenliste

- 1: Fahrzeuginnenraum
- 2: Kraftfahrzeug
- 3: Schalttafel
- 4: Verkleidung
- 5: freies Ende
- 6: Fußraum
- 7: Knieaufprallschutzeinrichtung
- 8: Aufnahmegehäuse
- 8a: Einlageteil
- 8b: Umspritzung
- 9: Schutzkissen
- 10: Aufblaseinrichtung
- 11: Steuerleitung
- 12: Abdeckung
- 12a: Einlageteil
- 12b: Umspritzung
- 13-17': Gehäusewandungen
- 18: Gehäuseseitenwand
- 19: Gehäusedeckel
- 20: Scharniereinrichtung
- 21: Pfeil
- 22: Gehäuseecke
- 23: Funktionsabschnitt
- 24: Linie
- 25: Abschnitt
- 26: Gehäuseboden
- 27: Austrittsöffnung
- 28,28': Halteeinrichtung
- 29: erstes Riegelorgan
- 30: zweites Riegelorgan
- 31: Rastnase
- 32: Vertiefung
- 33: Einrichtung
- 34: Fortsatz
- 35: Führungselement
- 36: Führungsbahn
- 37: Bahnende
- 38: Wandstruktur
- 39-41: Falten
- 42-45: Lagen
- PF: Pfeil
- SP: Schließposition
- OP: Offenposition
- AS: Aufblasstellung
- TF: Tiefe

## Patentansprüche

1. Knieaufprallschutzeinrichtung (7) für eine Kraftfahrzeug (2), mit zumindest einem aufblasbaren Schutzkissen (8), mit einem mehrere Gehäusewandungen (13-17) umfassenden Aufnahmegehäuse (8) für das Schutzkissen (9) und mit einer bewegbaren Abdeckung (12), die eine Austrittsöffnung (27) am Aufnahmegehäuse (8) entweder verschließen oder freigeben kann, wobei
entweder
mehrere Gehäusewandungen (13-16) eine umlaufende Gehäuseseitenwand (18) bilden und die Abdeckung (12) mit zumindest einer dieser Gehäusewandungen (13-16) einstückig ausgebildet ist,
oder
mehrere Gehäusewandungen (13-16, 17') eine umlaufende Gehäuseseitenwand (18) und einen Abschnitt eines Gehäusebodens (26) des Aufnahmegehäuses (8) bilden und die Abdeckung (12) mit zumindest einer den Abschnitt des Gehäusebodens (26) bildenden Gehäusewandung (17') einstückig ausgebildet ist,
und wobei die Abdeckung (12) Bestandteil des Aufnahmegehäuses (8) ist und mit zumindest einer der Gehäusewandungen (13-17') einstückig oder stoffschlüssig ausgebildet ist,
**dadurch gekennzeichnet, dass** am Aufnahmegehäuse (8) eine Einrichtung (33) angebracht ist, die eine Öffnungsweite, insbesondere Öffnungswinkel, der Abdeckung (12) in der Offenposition (OP) begrenzt, wobei die Einrichtung (33) zur Öffnungsweitenbegrenzung ein an der Abdeckung (12) angebrachtes Führungselement (35) und in einer der Gehäusewandungen (13-16) der Gehäuseseitenwand (18) eine Führungsbahn (36) mit einem Bahnende (37), in die das Führungselement (35) eingreift, aufweist.

2. Knieaufprallschutzeinrichtung nach Anspruch 1, **dadurch gekennzeichnet, dass** das Aufnahmegehäuse (8) eine Halteeinrichtung (28,28') aufweist, die die Abdeckung (12) in eine die Austrittsöffnung (27) verschließenden Schließposition (SP) hält, wobei die Halteeinrichtung (28) vorzugsweise zwei ineinander greifende und voneinander lösbare Riegelorgane (29, 30) aufweist.

3. Knieaufprallschutzeinrichtung nach einem der vorhergehenden Ansprüche, **dadurch gekennzeichnet, dass** das Aufnahmegehäuse (8) vollständig oder teilweise aus einen Kunststoff oder Metall hergestellt ist.

4. Knieaufprallschutzeinrichtung nach einem der vorangehenden Ansprüche 3, **dadurch gekennzeichnet, dass** das Aufnahmegehäuse (8) ein Einlageteil (8a) aufweist, welches von einem Kunststoff (8b) umspritzt ist, wobei das Einlageteil (8a) vorzugsweise aus einem Organosheet besteht.

5. Knieaufprallvorrichtung nach einem der vorangehenden Ansprüche, **dadurch gekennzeichnet, dass** das Aufnahmegehäuse (8) zumindest teilweise aus Polypropylen oder aus Polyamid besteht.

6. Knieaufprallvorrichtung nach den Ansprüchen 4 und 5, wobei das Einlageteil (8a) ein Organosheet ist, bei dem Fasern in eine Matrix aus Polypropylen oder Polyamid eingebettet sind.

7. Knieaufprallvorrichtung nach einem der Ansprüche 1 bis 4, **dadurch gekennzeichnet, dass** das Aufnahmegehäuse (8) zumindest teilweise aus einem Thermoplastischen Polymer besteht.

8. Knieaufprallvorrichtung nach Anspruch 4 und nach Anspruch 7, wobei das Einlageteil (8a) ein Organosheet ist, bei dem Fasern in eine Matrix aus Thermoplastischem Polymer eingebettet sind.

9. Knieaufprallvorrichtung nach einem der vorangehenden Ansprüche, **dadurch gekennzeichnet, dass** die Abdeckung (12) ein Einlageteil (12a) aufweist, welches von einem Kunststoff (12b) umspritzt ist.

10. Knieaufprallvorrichtung nach Anspruch 9, **dadurch gekennzeichnet, dass** das Einlageteil (12a) aus einem Organosheet besteht.

11. Knieaufprallvorrichtung nach einem der vorangehenden Ansprüche, **dadurch gekennzeichnet, dass** die Abdeckung (12) zumindest teilweise aus einem Thermoplastischen Elastomer besteht.

12. Knieaufprallvorrichtung nach einem der Ansprüche 9 oder 10 und nach Anspruch 11, **dadurch gekennzeichnet**, wobei das Einlageteil (12a) ein Organosheet ist, bei dem Fasern in eine Matrix aus einem Thermoplastischem Elastomer eingebettet sind.

13. Knieaufprallvorrichtung nach einem der Ansprüche 5 oder 6 und nach einem der Ansprüche 11 oder 12, wobei Aufnahmegehäuse (8) und Abdeckung (12) ein 2-K-Bauteil bilden.

14. Knieaufprallvorrichtung nach einem der vorangehenden Ansprüche, **dadurch gekennzeichnet, dass** zur Verstärkung des Aufnahmegehäuses (8) Fasern unmittelbar in den spritzgegossenen Kunststoff (8b) eingebettet sind und die Abdeckung (12) aus einem Thermoplastischen Elastomer ohne Faserverstärkung besteht.

15. Knieaufprallvorrichtung nach einem der Ansprüche 7 oder 8 und einem der Ansprüche 11 oder 12, wobei Aufnahmegehäuse und Abdeckung einstückig gespritzt sind und somit ein 1-K-Bauteil bilden.

## Claims

1. A knee impact protection device (7) for a motor vehicle (2) having at least one inflatable protective cushion (8) with a receiving housing (8) for the protective cushion (9) that comprises a plurality of housing walls (13-17), and with a movable cover (12) that can either close or release an exit opening (27) in the receiving housing (8), wherein
either
a plurality of housing walls (13-16) form a peripheral housing side wall (18), and the cover (12) is integral with at least one of these housing walls (13-16),
or
a plurality of housing walls (13-16, 17') form a peripheral housing side wall (18) and a section of a housing floor (26) of the receiving housing (8), and the cover (12) is integral with at least one housing wall (17') forming the section of the housing floor (26),
and wherein the cover (12) is part of the receiving housing (8) and is integral or integrally bonded with at least one of the housing walls (13-17'),
**characterized in that** a device (33) is attached to the receiving housing (8) that limits an opening width, in particular an opening angle, of the cover (12) in the open position (OP), wherein the device (33) for limiting the opening width has a guide element (35) attached to the cover (12) and, in one of the housing walls (13-16) of the housing side wall (18), has a guide track (36) with a track end (37) in which the guide element (35) engages.

2. The knee impact protection device according to claim 1, **characterized in that** the receiving housing (8) has a holding device (28, 28') that holds the cover (12) in a closed position (SP) which closes the exit opening (27), wherein the holding device (28) preferably has two latching elements (29, 30) that engage in each other and are releasable from each other.

3. The knee impact protection device according to one of the preceding claims, **characterized in that** the receiving housing (8) is completely or partially made of a plastic or metal.

4. The knee impact protection device according to one of the preceding claims, **characterized in that** receiving housing (8) has an insertion part (8a) that is overmolded by a plastic (8b), wherein the insertion part (8a) preferably consists of an organo sheet.

5. The knee impact device according to one of the preceding claims, **characterized in that** the receiving housing (8) consists at least partially of polypropylene or polyamide.

6. The knee impact device according to claims 4 and 5, wherein the insertion part (8a) is an organo sheet in which fibers are embedded in a matrix of polypropylene or polyamide.

7. The knee impact device according to one of claims 1 to 4, **characterized in that** the receiving housing (8) at least partially consists of a thermoplastic polymer.

8. The knee impact device according to claim 4 and according to claim 7, wherein the insertion part (8a) is an organo sheet in which fibers are embedded in a matrix of a thermoplastic polymer.

9. The knee impact device according to one of the preceding claims, **characterized in that** the cover (12) has an insertion part (12a) that is overmolded by a plastic (12b).

10. The knee impact device according to claim 9, **characterized in that** the insertion part (12a) consists of an organo sheet.

11. The knee impact device according to one of the preceding claims, **characterized in that** the cover (12) consists of at least partially of a thermoplastic elastomer.

12. The knee impact device according to one of claims 9 or 10 and according to claim 11, **characterized in that** wherein the insertion part (12a) is an organo sheet in which fibers are embedded in a matrix of a thermoplastic elastomer.

13. The knee impact device according to one of claims 5 or 6 and according to one of claims 11 or 12, wherein the receiving housing (8) and cover (12) form a two-component part.

14. The knee impact device according to one of the preceding claims, **characterized in that** to reinforce the receiving housing (8), fibers are directly embedded in the injection-molded plastic (8b), and the cover (12) consists of a thermoplastic elastomer without fiber reinforcement.

15. The knee impact device according to one of claims 7 or 8 and one of claims 11 or 12, **wherein** the receiving housing and cover are injection molded integrally and therefore form a single-component part.

## Revendications

1. Dispositif de protection des genoux contre les chocs (7) pour un véhicule automobile (2), comprenant au moins un coussin gonflable de sécurité (8), un boîtier de logement (8) comprenant plusieurs parois de boîtier (13-17) pour le coussin de sécurité (9) et un couvercle (12) mobile, qui peut fermer ou ouvrir un orifice de sortie (27) du boîtier de logement (8), dans lequel
soit
plusieurs parois de boîtier (13-16) forment une paroi latérale périphérique de boîtier (18) et le couvercle (12) est réalisé d'un seul tenant avec au moins une de ces parois de boîtier (13-16),
soit
plusieurs parois de boîtier (13-16, 17') forment une paroi latérale périphérique de boîtier (18) et une partie d'un fond de boîtier (26) du boîtier de logement (8), et le couvercle (12) est réalisé d'un seul tenant avec au moins une paroi de boîtier (17') formant la partie du fond de boîtier (26),
et dans lequel le couvercle (12) est un élément du boîtier de logement (8) et est réalisé d'un seul tenant ou à liaison de matière avec au moins une des parois de boîtier (13-17'),
**caractérisé en ce qu'**un dispositif (33) est placé sur le boîtier de logement (8), ledit dispositif limitant une largeur d'ouverture, en particulier un angle d'ouverture, du couvercle (12) dans la position ouverte (OP), le dispositif (33) pour la limitation de largeur d'ouverture comportant un élément de guidage (35) placé sur le couvercle (12) et une glissière de guidage (36) dans une des parois de boîtier (13-16) de la paroi latérale de boîtier (18), qui est dotée d'une extrémité de glissière (37), dans laquelle l'élément de guidage (35) vient en prise.

2. Dispositif de protection des genoux contre les chocs selon la revendication 1, **caractérisé en ce que** le boîtier de logement (8) comporte un dispositif de maintien (28, 28'), qui maintient le couvercle (12) dans une position fermée (SP) fermant l'orifice de sortie (27), le dispositif de maintien (28) comportant de préférence deux organes de verrouillage (29, 30) en prise l'un avec l'autre et libérables l'un de l'autre.

3. Dispositif de protection des genoux contre les chocs selon l'une des revendications précédentes, **caractérisé en ce que** le boîtier de logement (8) est entièrement ou partiellement fabriqué en matière plastique ou en métal.

4. Dispositif de protection des genoux contre les chocs selon l'une des revendications précédentes 3, **caractérisé en ce que** le boîtier de logement (8) comporte une pièce formant insert (8a), qui est surmoulée par injection d'une matière plastique (8b), la pièce formant insert (8a) étant de préférence constituée d'un organosheet.

5. Dispositif contre les chocs aux genoux selon l'une des revendications précédentes, **caractérisé en ce que** le boîtier de logement (8) est au moins partiellement constitué de polypropylène ou de polyamide.

6. Dispositif contre les chocs aux genoux selon les revendications 4 et 5, dans lequel la pièce formant insert (8a) est un organosheet, dans lequel des fibres sont incorporées dans une matrice en polypropylène ou polyamide.

7. Dispositif contre les chocs aux genoux selon l'une des revendications 1 à 4, **caractérisé en ce que** le boîtier de logement (8) est au moins partiellement constitué d'un polymère thermoplastique.

8. Dispositif contre les chocs aux genoux selon la revendication 4 et la revendication 7, dans lequel la pièce formant insert (8a) est un organosheet, dans lequel des fibres sont incorporées dans une matrice en polymère thermoplastique.

9. Dispositif contre les chocs aux genoux selon l'une des revendications précédentes, **caractérisé en ce que** le couvercle (12) comporte une pièce formant insert (12a), qui est surmoulée par injection d'une matière plastique (12b).

10. Dispositif contre les chocs aux genoux selon la revendication 9, **caractérisé en ce que** la pièce formant insert (12a) est constituée d'un organosheet.

11. Dispositif contre les chocs aux genoux selon l'une des revendications précédentes, **caractérisé en ce que** le couvercle (12) est au moins partiellement constitué d'un élastomère thermoplastique.

12. Dispositif contre les chocs aux genoux selon la revendication 9 ou 10 et selon la revendication 11, **caractérisé en ce que** la pièce formant insert (12a) est un organosheet, dans lequel des fibres sont incorporées dans une matrice en élastomère thermoplastique.

13. Dispositif contre les chocs aux genoux selon la revendication 5 ou 6 et selon la revendication 11 ou 12, dans lequel le boîtier de logement (8) et le couvercle (12) forment un élément structural à deux composants.

14. Dispositif contre les chocs aux genoux selon l'une des revendications précédentes, **caractérisé en ce que**, pour renforcer le boîtier de logement (8), des fibres sont incorporées directement dans la matière plastique (8b) moulée par injection et le couvercle (12) est constitué d'un élastomère thermoplastique sans renforcement par des fibres.

15. Dispositif contre les chocs aux genoux selon la revendication 7 ou 8 et selon la revendication 11 ou 12, dans lequel le boîtier de logement et le couvercle sont injectés d'un seul tenant et forment ainsi un élément structural à un composant.
